Europäisches Patentamt

European Patent Office

Office européen des brevets

(11) Publication number: **0 158 436**
**B1**

## EUROPEAN PATENT SPECIFICATION

(45) Date of publication of patent specification: **28.09.88**

(51) Int. Cl.⁴: **B 60 C 9/20**

(21) Application number: **85301523.8**

(22) Date of filing: **05.03.85**

(54) Pneumatic tire.

(30) Priority: **05.03.84 JP 40534/84**

(43) Date of publication of application:
**16.10.85 Bulletin 85/42**

(45) Publication of the grant of the patent:
**28.09.88 Bulletin 88/39**

(84) Designated Contracting States:
**DE FR GB**

(56) References cited:
**FR-A-2 295 849**
**US-A-3 090 189**
**US-A-3 090 190**
**US-A-4 169 495**
**US-A-4 216 813**

(73) Proprietor: **Bridgestone Corporation**
**10-1, Kyobashi 1-Chome Chuo-Ku**
**Tokyo 104 (JP)**

(72) Inventor: **Yagi, Akira**
**Izumi 3-chome Suginami-ku**
**Tokyo (JP)**
Inventor: **Shimada, Tatsuro**
**989-4, Mitsuki Musashimrayama City**
**Tokyo (JP)**
Inventor: **Kobayashi, Kazuomi**
**2800-1, Ogawahigashi-Cho Kodaira City**
**Tokyo (JP)**

(74) Representative: **Whalley, Kevin et al**
**MARKS & CLERK 57/60 Lincoln's Inn Fields**
**London WC2A 3LS (GB)**

Courier Press, Leamington Spa, England.

## Description

This invention relates to a pneumatic tire, particularly for a passenger car, and more particularly to a pneumatic tire for a passenger car having a belt composed of steel cords and having an improved cornering stability.

In a pneumatic tire having a carcass as a reinforcement for a tire casing and a belt comprising two parallel-arranged belt layers each containing steel cords therein, the steel cords of which layers being crossed with respect to the mid-circumferential line of the tire, the rigidity of the belt is usually high and the cornering stability is excellent over a region extending from a small turning angle to middle (intermediate) turning angle because when a slip angle (hereinafter abbreviated as SA) is imparted during the running of the tire, the deformation of the belt is small and hence the cornering power (hereinafter abbreviated as Cp) at the small turning angle is large.

However, as the Cp becomes larger, the attainment of maximum cornering force (hereinafter abbreviated as CF) at a higher SA is more rapidly attained, so that the rapid change of CF over a region extending from a middle turning angle to a large turning angle adversely affects the cornering stability.

FR-A-2295849 corresponding to the preamble of claim 1 discloses a pneumatic tire for off-road vehicles, comprising a carcass composed of a plurality of superimposed rubberized plies each of parallel organic fiber cords and having a so-called bias construction in which the cords of one half or approximately one half of the carcass plies cross the cords of the remaining carcass plies, and at least one crown reinforcing layer composed of a plurality of substantially parallel reinforcing elements embedded in rubber, each reinforcing element being composed of a bundle of helically formed filaments assembled together without twisting, each said reinforcing element being formed of material having a tensile strength of at least 140 kg/mm² and each reinforcing element having an elongation at break which is 0.15 to 1.7 times that of an organic fiber cord of the said carcass, the or each said crown reinforcing layer as a whole being extensible in the direction in which the cords run.

It is an aim of the present invention to provide a pneumatic tire, particularly for use in passenger cars, capable of maintaining appropriate cornering stability over the whole region extending from small turning angle to large turning angle by improving the belt structure so as to delay the attainment of maximum CF with increased SA without particularly decreasing the Cp.

According to the invention, there is provided a pneumatic tire, comprising a carcass as a reinforcement for a tire casing and a belt comprising two parallel-arranged belt layers each containing flexible and stretchable steel cords, the steel cords of which layers being crossed with respect to the mid-circumferential line of the tire, the cords of one layer crossing those of the other layer, the said belt being composed of a combination of said rubberized layers each cord of which having a distinct bending resistance and an elongation under a load of 3 kp of 0.5% to 2% in a tension test, and an additional layer and/or cap composed of textile cords surrounding the outer periphery of both side ends of the rubberized layer, characterized in that the said steel cords of said rubberized layers have strand construction in the same direction, and the said bending resistance lies between 5 p/mm and 1.4 p/mm measured as a ratio of load to unit deflection under loading in a three-point bending test, in which bending test the steel cord to be tested is extended between a pair of supports with a circular section of 9.5 mm in outer diameter fixed at a distance corresponding to 50 times the diameter of the cord, and subjected to a bending deformation by applying with a loading tool with a circular section of 9.5 mm in outer diameter to the middle of the steel cord at a moving speed of 10mm/min.

The invention will be further described, by way of example only, with reference to the accompanying drawings, wherein:

Fig. 1 is a graph showing the relation between CF and SA;

Fig. 2 is a diagrammatic view illustrating a test for bending resistance;

Fig. 3 is a graph showing the result of the bending resistance test;

Fig. 4 is a graph showing the relation between tensile load and elongation;

Fig. 5 is a schematic view of the belt structure of a tire according to the invention;

Fig. 6 is a diagramatic sectional view of an embodiment of a pneumatic tire according to the invention; and

Fig. 7 is a graph showing comparative results of the relation between CF and SA.

Fig, 1 shows an example of a SA-CF curve by a solid line, When the Cp level represented by the gradient of the solid line at a small slip angle is high, the maximum CF is attained early to cause rapid change of transverse force near the maximum cornering force (CF max). Therefore, when a certain turning angle is given to the tire, rapid behaviour is brought about in the moving performance of the vehicle.

For this reason, it is necessary to-maintain the cornering stability over a region extending from a small turning angle to a large turning angle or provide a high value of SA at CF max by making the SA at CF max higher while maintaining a high Cp level to obtain a SA-CF curve for preventing rapid change of transverse force as shown by a broken line.

For this purpose, it is important that the bending resistance of the steel cord used in the belt is reduced and the stretchability thereof is made high, whereby the deformation of the tire tread when being subjected to SA is facilitated. to maintain the adhesion zone against the road surface and prevent the reduction of Cp level accompanied with a reduction of the belt rigidity.

The above requirements of the bending resistance and stretchability of the steel cord are achieved by the use of steel cord with a strand construction in the same direction such as 3 x 7 twisting construction, satisfying a bending resistance of 5-1.4 p/mm (gf/mm) measured as a ratio of load to unit deflection under loading in a three-point bending test and an elongation under a load of 3 Kp (kgf) of 0.5 to 2% in a tension test, which is different from the conventional steel cord for use in a belt having a so-called layer construction such as 1 x 5 construction. Further, the belt is used in combination with a layer or a cap surrounding the outer periphery of both side ends of the steel cord layer in order to maintain the required Cp level.

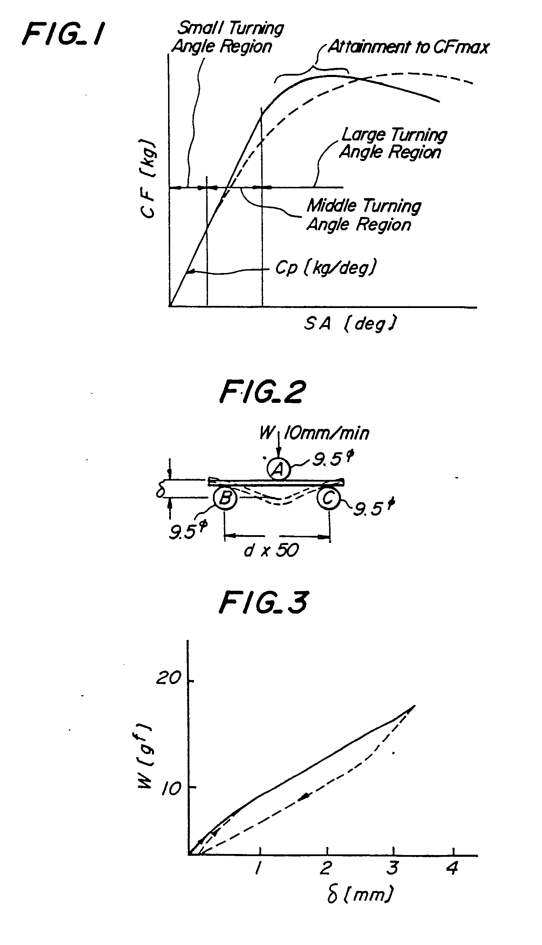

In the three-point bending test, as shown in Fig. 2, a steel cord to be tested is extended between a pair of supports B, C with a circular section of 9.5 mm in outer diameter fixed at a distance corresponding to 50 times the diameter of the cord, and subjected to a bending deformation by applying with a loading tool A with a circular section of 9.5 mm in outer diameter to the middle of the cord at a moving speed of 10 mm/min, from which is measured a relation between load and deflection as shown Fig. 3. The gradient of the straight line shown by a solid line of Fig. 3, ie, ratio of load to unit deflection, is expressed as the bending resistance. According to the invention, the bending resistance is within a range of 5 p/mm-1.4 p/mm.

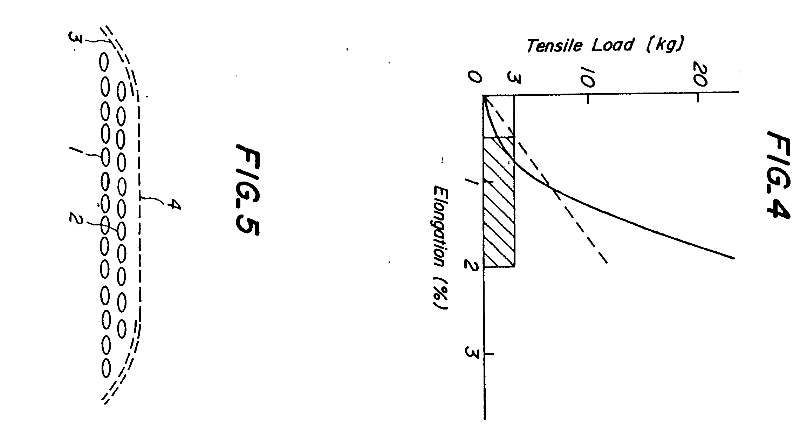

In the tension test, a tensile load is applied to the test cord having a gauge length of 200 mm to measure an elongation expressed as a ratio of elongated part to gauge length. According to the invention, the steel cord has such a strechability that the elongation under a tensile load of 3 Kp (kgf) is within a range of 0.5-2% as shown by a solid line in Fig. 4.

Fig. 5 illustrates an example of a combination of the two parallel-arranged belt layers of steel cords with a layer and/or a cap as the belt, wherein the belt layers 1, 2 are laminated one upon the other at stepwise difference while being free at both ends thereof, and the layer 3 and the cap 4 are composed of suitable textile cords such as nylon cords or the like, respectively.

The layer 3 and cap 4 function as a reinforcement for the belt, and contribute to maintain the desired Cp level in spite of the reduction of the belt rigidity.

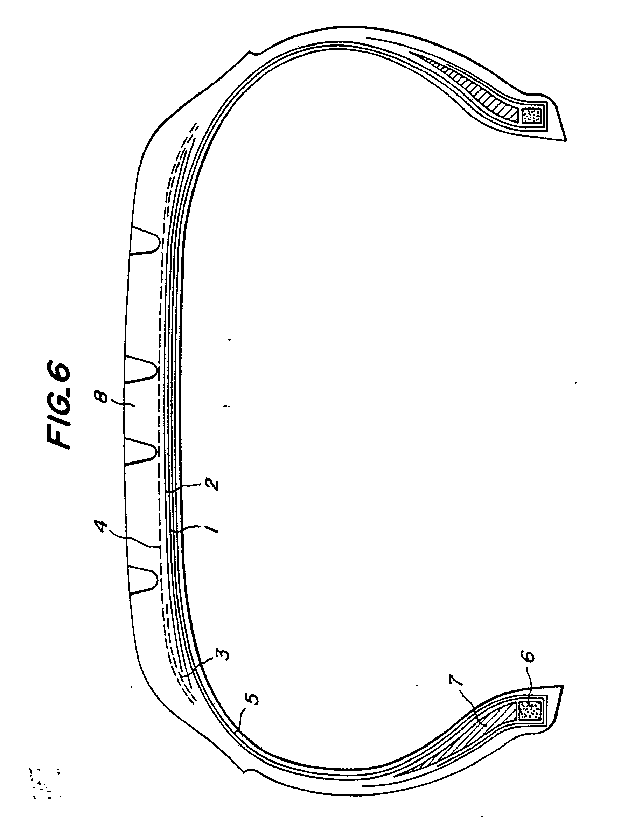

In Fig. 6 is shown an embodiment of a pneumatic tire according to the invention having a tire size of 215/60 VR 15, wherein numerals 1 and 2 are belt layers of steel cords, numerals 3 and 4 are a layer and a cap of nylon cords, numeral 5 a carcass, numeral 6 a bead core, numeral 7 a bead filler, and numeral 8 a tread rubber.

In each of the belt layers 1 and 2, steel cords with strand construction of 3 x 7 x O.15 mm in the same direction (cord strength: 90 kg) are arranged at an end count of 22 cords/25 mm, and having a bending resistance of 4.3 p/mm (gf/mm) and an elongation of 0.65%, respectively.

For comparison, a control tire was manufactured with substantially the same construction as in Fig. 6 except that steel cords with a layer construction of 1 x 5 x 0.23 mm (cord strength: 65 kg) are arranged at an end count of 22 cords/25 mm as a belt. This steel cord has a bending resistance of 7.5 p/mm (gf/mm) and an elongation of 0.35%.

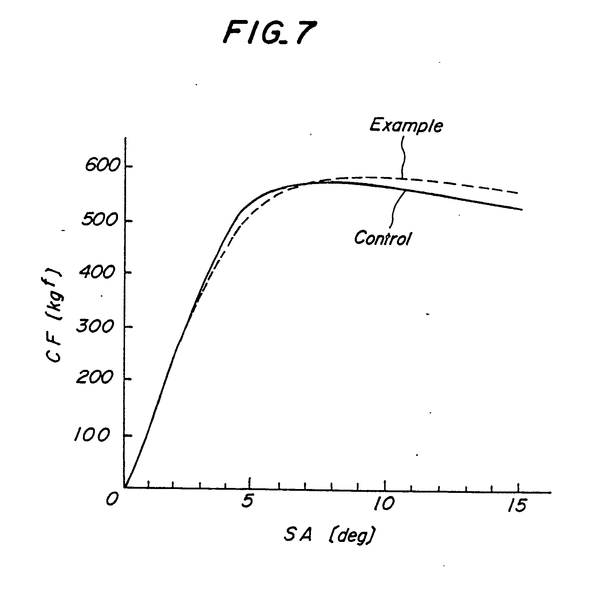

After each of these tires was mounted on a normal rim having a width of 6 inches, a CF-SA curve was plotted under conditions that the internal pressure was 2.0 kg/cm² and the load was 650 kg to obtain results as shown in Fig, 7, wherein the solid line indicates the control tire and the broken line indicates the example tire according to the invention. As apparent from Fig. 7, according to the invention, the attainment of CF max can be delayed to a higher SA while maintaining the Cp at substantially the same level.

In a pneumatic tire having a belt reinforcement composed of steel cords, the problem of cornering stability at a large turning angle is overcome according to the invention, whereby the cornering stability over a whole region extending from small turning angle to large turning angle can generally be enhanced while maintaining sufficient Cp level up to the middle turning angle region.

**Claim**

1. A pneumatic tire, comprising a carcass (5) as a reinforcement for a tire casing and a belt comprising two parallel-arranged belt layers (1,2) each containing flexible and stretchable steel cords, the steel cords of which layers (1, 2) being crossed with respect to the mid-circumferential line of the tire, the cords of one layer (1, 2) crossing those of the other layer (2, 1), the said belt being composed of a combination of said rubberized layers (1, 2) each cord of which having a distinct bending resistance and an elongation under a load of 3 kp of 0.5% to 2% in a tension test, and an additional layer (3) and/or cap (4) composed of textile cords surrounding the outer periphery of both side ends of the rubberized layers (1, 2), characterized in that the said steel cords of said rubberized layers (1, 2) have strand construction in the same direction. and the said bending resistance lies between 5 p/mm and 1.4 p/mm measured as a ratio of load to unit deflection under loading in a three-point bending test, in which bending test (figure 2) the steel cord to be tested is extended between a pair of supports (B, C) with a circular section of 9.5 mm in outer diameter fixed at a distance corresponding to 50 times the diameter of the cord, and subjected to a bending deformation by applying with a loading tool (A) with a circular section of 9.5 mm in outer diameter to the middle of the steel cord at a moving speed of 10 mm/min.

2. A pneumatic tire as claimed in claim 1, characterized in that each said rubberized layer (1, 2) of steel cords is free at both circumferential ends.

**Patentansprüche**

1, Luftreifen mit einer Karkasse (5) als Verstärkung für einen Reifenmantel und einem Gürtel mit zwei parallel angeordneten Gürtelschichten (1, 2), von denen jede flexiblen und streckbaren Stahlcord enthält, wobei der Stahlcord dieser Schichten (1, 2) hinsichtlich der mitt-umfänglichen Linie des Reifens gekreuzt ist und der Cord der einen Schicht (1, 2) den der anderen Schicht (2, 1) kreuzt, und wobei der Gürtel aus einer Kombination der gummierten Schichten (1, 2) zusammengesetzt ist, von denen jeder Cord eine bestimmte Biegefestigkeit und Dehnbarkeit unter einer Last von 3 kp von 0,5 % bis 2 % in einem Zugtest aufweist, und einer zusätzlichen Schicht (3) und/oder Abdeckung (4) aus Textilcord, die die äußere Peripherie der beiden Seitenenden der gummierten Schichten (1, 2) umgibt, dadurch gekennzeichnet, daß der Stahlcord der gummierten Schichten (1, 2) einen gleichgerichteten Strangaufbau hat und die Biegefestigkeit zwischen 5 p/mm und 1,4 p/mm liegt, gemessen als Verhältnis von Belastung zu Einheitsabweichung unter Belastung in einem Dreipunkt-Biegetest, in welchem Biegetest (Fig. 2) der zu testende Stahlcord zwischen einem Paar von Trägern (B, C) mit kreisförmigen Querschnitt von 9,5 mm äußerem Durchmesser und einer festen Entfernung, die dem 50-fachen des Durchmessers des Cords entspricht, eingespannt und einer Biegeverformung durch Anwendung einer Last (A) mit kreisförmigem Querschnitt von 9,5 mm äußerem Durchmesser auf die Mitte des Stahlcords bei einer Bewegungsgeschwindigkeit von 10 mm/min unterworfen wird.

2. Luftreifen, wie in Anspruch 1 beansprucht, dadurch gekennzeichnet, daß jede gummierte Schicht (1, 2) des Stahlcords an beiden umfänglichen Enden frei ist.

**Revendications**

1. Bandage pneumatique comprenant une carcasse (5) en tant que renforcement pour une enveloppe de bandage et une ceinture comprenant deux couches de ceinture agencées parallèlement (1, 2), chacune contenant des cordes flexibles et extensibles d'acier, les cordes d'acier de ces couches (1, 2) se croisant par rapport à la ligne circonferentielle moyenne du bandage, les cordes d'une couche (1, 2) croisant celles de l'autre couche (2, 1), ladite ceinture se composant d'une combinaison desdites couches caoutchoutées (1, 2), dont chaque corde a une résistance distincte à la flexion et un allongement sous une charge de 3 kp de 0,5% à 2% dans un essai de tension, et une couche additionnelle (3) et/ou coiffe (4) composée de cordes textiles entourant le pourtour externe des deux extremites laterales des couches caoutchoutées (1, 2), caractérise en ce que lesdites cordes d'acier desdites couches caoutchoutées (1, 2) ont une construction des brins dans la même direction et ladite résistance à la flexion se trouve entre 5 p/mm et I,4 p/mm en mesurant sous la forme d'un rapport de la charge à la déformation unitaire sous la charge dans un essai de flexion en trois points, essai de flexion (figure 2) dans lequel la corde d'acier à tester est etendue entre une paire de supports (B, C) avec une section circulaire de 9,5 mm de diamètre externe, qui sont fixés à une distance correspondant à 50 fois le diamètre de la corde et est soumise à une deformation par flexion par application avec un outil de charge (A) d'une section circulaire de 9,5 mm de diamètre externe au milieu de la corde d'acier à une vitesse de déplacement de 10 mm/mn.

2. Bandage pneumatique selon la revendication 1, caractérisé en que chaque couche caoutchoutée (1, 2) de cordes d'acier est libre à ses deux extremités circonférentielles.

## FIG_1

Small Turning Angle Region

Attainment to CFmax

CF [kg]

Large Turning Angle Region

Middle Turning Angle Region

Cp [kg/deg]

SA [deg]

## FIG_2

W 10mm/min

Ⓐ 9.5⌀

Ⓑ

Ⓒ 9.5⌀

9.5⌀

d x 50

## FIG_3

20

W [gf]

10

1    2    3    4

δ [mm]

## FIG.4

## FIG.5

FIG.6

# FIG. 7